# EUROPÄISCHE PATENTSCHRIFT

(11) **EP 1 282 843 B1**
(45) Veröffentlichungstag und Bekanntmachung des Hinweises auf die Patenterteilung: **17.11.2004**
(21) Anmeldenummer: 01936209.4
(22) Anmeldetag: 07.04.2001
(51) Int. Cl.: G05B 19/4063

(54) **VERFAHREN ZUR STEUERUNG VON MASCHINEN UND INFORMATIONSSYSTEM FÜR DEN BETRIEB EINER MASCHINE**
METHOD FOR CONTROLLING MACHINES AND AN INFORMATION SYSTEM FOR OPERATING A MACHINE
PROCEDE DE COMMANDE DE MACHINES ET SYSTEME D'INFORMATION POUR FAIRE FONCTIONNER UNE MACHINE

(30) Priorität: 19.05.2000 DE 10024412
(43) Veröffentlichungstag der Anmeldung: 12.02.2003
(73) Patentinhaber: Westfalia Separator AG, 59302 Oelde (DE)
(72) Erfinder: FLEUTER, Markus, 59320 Ennigerloh (DE)
(74) Vertreter: Dantz, Jan Henning
(86) Internationale Anmeldenummer: PCT/EP2001/004014
(87) Internationale Veröffentlichungsnummer: WO 2001/090831

(56) Entgegenhaltungen:
- EP-A- 0 822 473
- DE-A- 19 749 002
- GB-A- 2 305 818
- US-A- 3 882 305

## Beschreibung

Die vorliegende Erfindung betrifft ein Verfahren zur Steuerung von Maschinen, insbesondere von Separatoren und Dekantern, und ein Informationssystem für den Betrieb einer Maschine. Solche Verfahren und Informationssysteme können bei Separatoren oder sonstigen Maschinentypen eingesetzt werden, bei denen laufend Betriebszustände für die Steuerung und Überwachung der Maschine erfaßt werden, eingesetzt werden.

Um vom Hersteller entfernt aufgestellte Maschinen im Falle eines Ausfalls zu analysieren, wird derzeit meist eine manuelle Schadensanalyse durchgeführt. Dabei geht beim Hersteller zunächst eine Schadensmeldung ein, der nach einem Fragenkatalog die Ursache des Schadens ergründen will. Beispielsweise wird zunächst untersucht, ob ein äußerlich erkennbarer Bruch von Bauteilen festzustellen ist. Ist ein solcher Bruch festzustellen, darf kein Neustart durchgeführt werden. Die Historie vor dem Ausfall wird dann erforscht, in dem die erfaßten Daten der Parameter wie Drehmoment, Drehzahlen, Stromaufnahmen, Lagertemperaturen, Schwingungen und der produktspezifischen Parameter wie Zulaufmenge, Flockungsmittelmenge, Verdünnungswassermenge, Kühlwassermenge, Zulaufkonzentration und Flockungsmittelkonzentration ausgewertet werden. Wenn anhand der Daten eine Schadensanalyse beim Hersteller möglich ist, kann der Monteur mit den erforderlichen Ersatzteilen anreisen und diese direkt einbauen, so daß die Maschine wieder angefahren werden kann.

In einer Vielzahl von Fällen ist jedoch kein äußerlich erkennbarer Bruch von Bauteilen festzustellen, so daß bei der Schadensanalyse untersucht wird, ob eine starke Geräuschentwicklung oder starke Vibrationen beim Ausfall aufgetreten sind. Wenn dieses der Fall war, ist ein Neustart nicht empfehlenswert. Sind keine weitere Daten beim Betreiber der Maschine abgespeichert worden, so muß den Schaden ein Monteur vor Ort beurteilen. Erst nach der Beurteilung erfolgt die erforderliche Ersatzteilbestellung und nach Einbau der Teile kann der Neustart erfolgen.

Wenn keine Auffälligkeiten beim Ausfall der Maschine aufgetreten sind, so kann nach Kontrolle der eventuell vorhandenen Daten ein Neustart erfolgen. Dabei können die mechanischen Parameter beobachtet werden, um bei Auffälligkeiten die Maschine frühzeitig wieder abzuschalten. Falls keine solche Auffälligkeiten auftreten, können produktspezifische Parameter des Verfahrensprozesses näher untersucht werden. Die Daten müssen dann an einen verfahrenstechnischen Experten weitergegeben werden. Falls eine Abklärung des Problems nicht möglich ist, so muß ein Experte vor Ort anreisen und das Problem vor Ort lösen.

Ferner ist es bekannt, daß im Schadensfall ein Rechner des Betreibers mit den Daten der Maschine mit einem Rechner des Herstellers verknüpft wird, um diesen die Daten zu senden. Bei diesem derzeitigen Systemen ist jedoch nachteilig, daß eine Schadensmeldung nur erfolgt, wenn bereits der Schaden eingetreten ist. Mit den bekannten Systemen können keine präventiven Maßnahmen ergriffen werden. Außerdem erhält der Hersteller nur relativ wenig Daten, die ihm im Schadensfall übersandt werden. Für den Hersteller ist es jedoch interessant zu erfahren, welche Bauteile der Maschine wie ausgelastet bzw. belastet sind und wie der Datenverlauf (Trend) vor einem Ausfall aussah.

Aus der DE-AS 25 51 882 ist eine Vorrichtung zur drahtlosen Fernübertragung der Drehzahl eines sich drehenden Teiles bekannt, bei der zwischen einem Sender und einem Empfänger dauernd Daten ausgetauscht werden. Diese Vorgehensweise ist für größere Maschinen nicht praktikabel, da dauernd eine Verbindung zwischen Sender und Empfänger bereitgestellt sein muß, was für die meisten Anwendungsfälle einen unnötiger Aufwand darstellt.

Ferner ist in der EP 891 814 A2 ein Verfahren und eine Vorrichtung zum Steuern von Zentrifugen offenbart, wobei an der Zentrifuge erfaßte Parameter aufgenommen und verarbeitet werden. Mit der zentralen Steuerung des Rechners können Daten auch zu einem entfernt liegenden Hersteller der Maschine übertragen werden. Allerdings ist das Informationssystem nicht für einen automatischen Überwachungsbetrieb durch den Hersteller geeignet.

Die GB 23 05 818 zeigt ein Verfahren zum Steuern von Büromaschinen, bei dem beim Betrieb der Büromaschinen anfallende Parameter als Datensätze in einem Speicher abgelegt werden. In bestimmten Zeitabständen können diese Datensätze an entfernte Stationen weitergeleitet werden. Falls Fehler erkennbar sind, können dann Warnungen erzeugt werden. Es handelt sich bei der Fehlererkennung jedoch nur um einen einfachen Ist-Wert/Soll-Wert Vergleich, sodass das Verfahren nur begrenzt an unterschiedliche Situationen anpassbar ist.

Die EP 822 473 offenbart ein Fernwartungssystem, bei dem industrielle Einrichtungen mit Computern überwacht werden. Hierfür sind die Computer über das Internet miteinander verbunden. Wenn ein in der Fabrik angeschlossener Computer das Auftreten eines Fehlers erfasst, kann dann über das Internet der Fehler gemeldet werden und auf der Empfängerseite kann dann eine Maßnahme zur Fehlerbehebung abgesendet werden, falls entsprechende Maßnahmen einprogrammiert sind.

Es ist daher Aufgabe der vorliegenden Erfindung ein Verfahren zur Steuerung von Maschinen und ein Informationssystem zu schaffen, daß eine automatische Überwachung der Maschinen ermöglicht und im Falle von Betriebszuständen, die von einem vorgegebenen Sollwertbereich abweichen, automatisch eine Fehlermeldung ausgibt. Die Fehlerdiagnose kann dann auch aus der Kombination verschiedener Meßwerte auf der Grundlage des Vergleichs mit einem mathematischen Prozeßmodel erfolgen.

Diese Aufgabe wird mit einem Verfahren zur Steuerung von Maschinen mit den Merkmalen des Anspruchs 1 und einem Informationssystem mit den Merkmalen des Anspruchs 6 gelöst.

Nach dem erfindungsgemäßen Verfahren werden die Betriebszustände, wie Stromverbrauch, Temperatur, Fördergeschwindigkeiten etc. an der Maschine erfaßt und die erfaßten Daten in einer Datenbank eines ersten Rechners gesammelt und gespeichert. Anschließend werden die Daten zu einem Speicher eines zweiten Rechners, vorzugsweise zu einem Rechner des Herstellers der Maschine übertragen. Dort werden die Daten mit den Soll-Betriebsdaten der Maschine verglichen und ausgewertet. Der Ist-Zustand wird erfaßt und eine Fehlermeldung erzeugt, falls der Ist-Zustand von dem Soll-Zustand abweicht. Dann wird automatisch die Fehlermeldung durch den Zweitrechner erfolgen. Die Ausgabe kann auch an ein Peripheriegerät und/oder einen weiteren Rechner ausgegeben. Nach diesem Verfahren wird eine automatische laufende Überwachung der Betriebszustände der Maschine ermöglicht. Gemäß der erfindungsgemäßen Ausführungsform erfolgt die Auswertung der Daten mittels Neuro-FUZZY-Logic Methoden, so daß die einzelnen Parameter in ihrer Bedeutung gewichtet werden. Häufig sind einzelne Parameter für den Betrieb der Maschine wichtiger als andere erfaßte Parameter, so daß durch die Gewichtung eine präzisere Analyse des Betriebszustandes der Maschine möglich ist.

Dem erfindungsgemäßen Steuerungsverfahren liegt die Erkenntnis zugrunde, daß bei verfahrenstechnischen Anlagen und/oder Separatoren oder Dekantern, gewisse Störungen beim Betriebsablauf sich frühzeitig an bestimmten Parametern oder der Kombination von Parametern erkennen lassen. Wenn z.B. bei einer Förderschnecke in einer Trommel das Material gefördert wird, lassen sich beispielsweise die Parameter Umdrehung der Förderschnecke, Stromverbrauch, Temperatur der Lager und Fördermenge erfassen. Falls der Stromverbrauch ansteigt und die anderen Parameter im wesentlichen gleich bleiben, deutet dies auf eine Veränderung der Konsistenz des durchgeführten Materials bzw. auf die Anbahnung einer möglichen Verstopfung hin. Es ist denkbar, daß z.B. noch bevor die Verstopfung tatsächlich auftritt, durch den Betreiber der Maschine Gegenmaßnahmen ergriffen werden können. Sollte dennoch ein Schadensfall eingetreten sein, kann der Hersteller der Maschine anhand der ihm automatisch übermittelten Daten auf schnellem Wege den Fehler analysieren, da er ausreichend Daten über die normalen Betriebszustände der Maschine des Betreibers besitzt. Bei der Fehlerdiagnose werden die aktuellen Daten mit dem mehrschichtigen mathematischen Modell des Maschinentyps und des Prozeßmodells verglichen. Mehrschichtigkeit bedeutet in diesem Zusammenhang, daß maschinenklassenspezifische Parameter (z.B. Dekanter oder Separator), prozessspezifische Parameter (z.B. Entwässerung oder Eindickung von Stoffgemischen) und maschinenspezifische Parameter (z.B. von der Leistung abhängig) vorhanden sind.

Die Übertragungsintervalle von der Maschine des Betreibers zu dem Hersteller können in Minutenintervallen, stundenweise oder tageweise erfolgen. Durch die regelmäßige Erfassung der Betriebszustände ist es dem Hersteller möglich, Rückschlüsse auf den Betrieb und mögliche Fehlerzustände zu erhalten, so daß frühzeitig und schnell reagiert werden kann. Ferner lassen sich bei der automatischen Überprüfung der Betriebszustände die Fehlermeldungen automatisch erzeugen, die beispielsweise eine akustische, visuelle oder sonstige Warnung beim Hersteller sein kann oder bei einer Zuordnung des Fehlers auch ein Steuerbefehl für die Maschine sein kann, der an den Rechner des Betreibers geleitet wird. Durch die laufende Erfassung von Daten der ausgelieferten Maschinen ist es dem Hersteller möglich, die Daten der Maschinen statistisch auszuwerten und für Fehlerdiagnoseprogramme einzusetzen.

Vorzugsweise werden bei der Auswertung der Daten die Soll-Betriebsdaten, die vom Hersteller vorgegeben sind, angepaßt. Dadurch können Besonderheiten beim Betrieb der Maschine, beispielsweise Materialunterschiede, Klimaunterschiede etc. berücksichtigt werden.

Vorzugsweise wird für die automatische Ausgabe der Fehlermeldung ein Rechner bzw. Adressat ermittelt, der in einem Land mit laufender Arbeitszeit steht. Da größere Maschinen meist weltweit vertrieben werden, muß in einem Schadensfall umgehend ein Experte zur Behebung des Schadens zur Verfügung stehen. Daher ist es wichtig, daß die Ausgabe der Fehlermeldung dort erfolgt, wo gerade ein Experte sofort mit der Schadensanalyse beginnen kann, soweit die automatische Fehleranalyse keinen eindeutigen Fehler zuordnen kann. Solche Fehlerzentren könnten in Asien, Europa und Amerika eingerichtet werden, damit rund um die Uhr ein Experte zur Verfügung steht.

Das erfindungsgemäße Informationssystem wird im wesentlichen von dem Hersteller der Maschine bereitgestellt. Dieser rüstet die Maschine mit den Meßeinrichtungen aus, die dann Daten zu einem Rechner beim Betreiber der Maschine liefern. Über eine Software wird der Rechner automatisch mit dem Rechner des Herstellers verbunden, so daß ein Datenabgleich und/oder eine Datenübertragung erfolgen kann. Beim Hersteller bündeln sich somit die Informationen der ausgelieferten Maschinen und der Hersteller kann mit einer Fehlerdiagnose und Auswertung der Daten beginnen. Die Auswerteeinheit umfasst dabei einen Datenspeicher, in dem eine Vielzahl von Fehlerzuständen mit den dazugehörigen Betriebszuständen in Form eines lernfähigen mehrschichtigen mathematischen Modells abgespeichert sind. Die gelieferten Daten können auch Rückschlüsse für die Konstruktion der Maschine geben. Es ist auch denkbar, daß der Rechner vor Ort das mathematische Prozeßmodell zyklisch vom Zweitrechner z.B. im Herstellerwerk herunterlädt und dieses zur ersten Fehlerdiagnose nutzt.

Die Erfindung wird nachfolgend anhand eines Ausführungsbeispiels mit Bezug auf die beigefügten Zeichnungen näher erläutert.

Es zeigen:
- Figur 1: ein Blockschaltbild eines Ausführungsbeispieles des erfindungsgemäßen Informationssystems;
- Figur 2: eine schematische Ansicht einer Maschine mit Meßeinrichtungen;
- Figur 3: eine Ansicht der Oberfläche für den Datenübertragungsprozeß;
- Figur 4: eine Oberfläche für die Überwachung und Diagnose der Maschine, und
- Figur 5: ein Blockschaltbild eines mehrschichtigen mathematischen Modells.

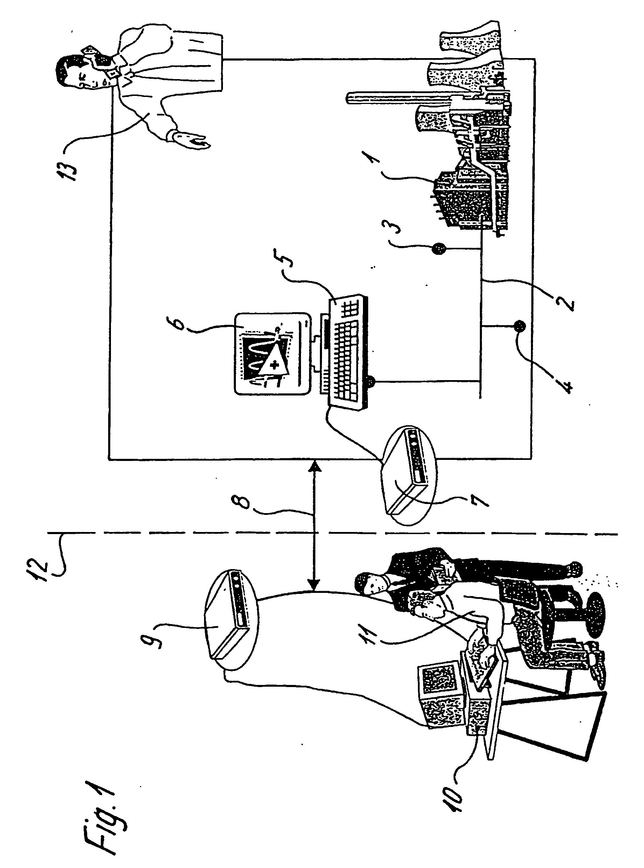

In Figur 1 ist das erfindungsgemäße Informationssystem schematisch dargestellt. In einer Fabrik 1 des Betreibers einer Maschine 20 (in Fig. 1 nicht dargestellt), beispielsweise eines Dekanters oder eines Separators, werden an der Maschine 20 Meßdaten erfaßt und über eine Bussystem 2 innerhalb der Firma 1 zu Adressaten, beispielsweise Rechnern 3 und 4 gesendet, an denen Prozeßabläufe visualisiert werden können. Über das Bussystem 2 werden die an der Maschine 20 erfaßten Daten zu einem Rechner 5 weitergeleitet, in dem diese Daten in einer Datenbank abgespeichert werden. An dem Rechner 5 können die Daten über einen Bildschirm 6 visualisiert werden. In vorgegebenen Intervallen stellt der Rechner 5 automatisch eine Verbindung mit einem Rechner 10 des Herstellers der Maschine 20 her. Hierfür ist ein Router 7 vorgesehen, der über ein Netzwerk 8, z.B. das Internet, das Telefonnetz oder ein sonstiges Netz eine Verbindung mit einem zweiten Router 9 beim Hersteller der Maschine erzeugt. Der räumliche Abstand der Rechner 5 und 10 ist durch die gestrichelte Linie 12 dargestellt. Danach erfolgt eine automatische Datenübertragung vom Rechner 5 zu dem Rechner 10.

Am Rechner 10 des Herstellers der Maschine 20 sitzt ein Experte 11, der mit den Betriebsabläufen der Maschinen 20 vertraut ist. Am Rechner 10 können die erfaßten Daten mit Hilfe des mathematischen Modells einerseits automatisch ausgewertet werden, soweit standardisierte Fehlerzustände bei den ermittelten Daten erkennbar sind, oder aber, falls kein standardisierte Fehler vorliegt, kann der Experte 11 eine manuelle Fehlerdiagnose erstellen. Falls keine Fehler bei den Betriebszuständen erkennbar sind, können die erfaßten Daten Rückschlüsse beim Hersteller für den Betrieb der Maschine 20 geben.

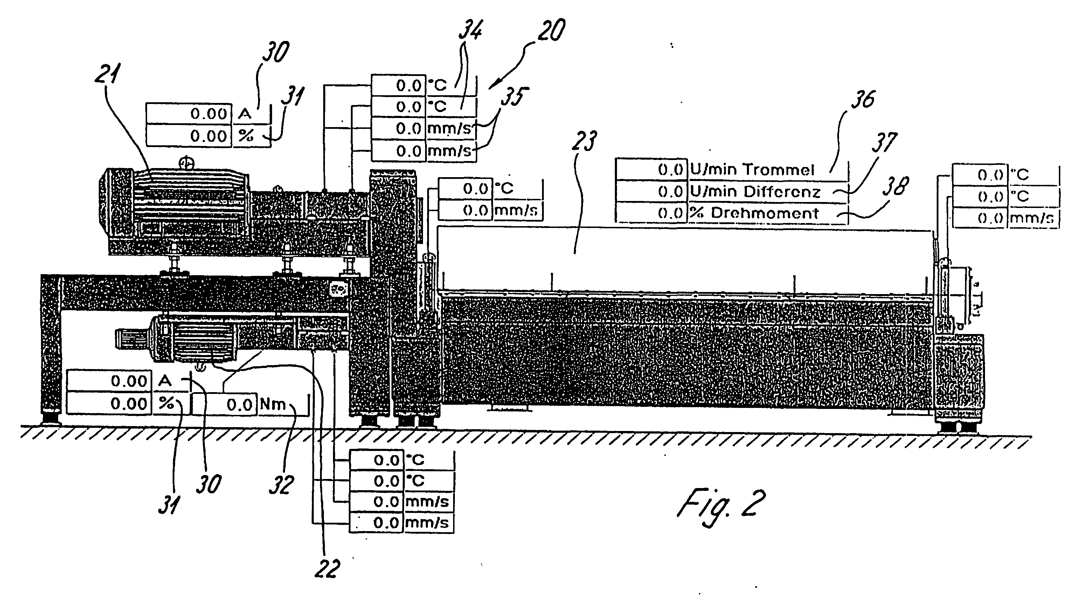

In Figur 2 ist beispielhaft eine erfindungsgemäß gesteuerte oder überwachte Maschine 20 in Form eines Dekanters abgebildet. Der Dekanter umfaßt einen Hauptmotor 21, der eine Trommel 23 antreibt. Unterhalb des Hauptmotors 21 ist ein weiterer Motor 22 angeordnet, der den Antrieb der in der Trommel 23 angeordneten Schnecke (nicht dargestellt) regelt. An dem Hauptmotor 21 werden der Stromverbrauch 30 und die Leistung 31 erfaßt. An dem Motor 22 werden der Stromverbrauch 30, die Leistung 31 und das Drehmoment 32 erfaßt. Ferner werden an dem Dekanter 20 Lagertemperaturen 34, Schwinggeschwindigkeiten 35, Umdrehungen der Trommel 36, die Differenz der Umdrehungen der Trommel und der Schnecke 37 und das Drehmoment 38 erfaßt. Außerdem werden Daten wie Produkttemperatur, Ölbadtemperatur, Schwingungen, Zulaufmenge erfaßt, um den Produktionsablauf an sich zu überwachen. Zusätzlich werden produktspezifische Parameter, wie Zulaufmenge, Flockungsmittelmenge, Verdünnungswassermenge, Kühlwassermenge, Zulaufkonzentration, Flockungsmittelkonzentration erfaßt, um den Betriebszustand für den spezifischen Produktionsablauf zu erfassen. In Figur 2 sind daher nur beispielhaft erfaßte Meßzustände gezeigt, da in der Praxis wesentlich mehr Daten von der Maschine 20 erfaßt werden.

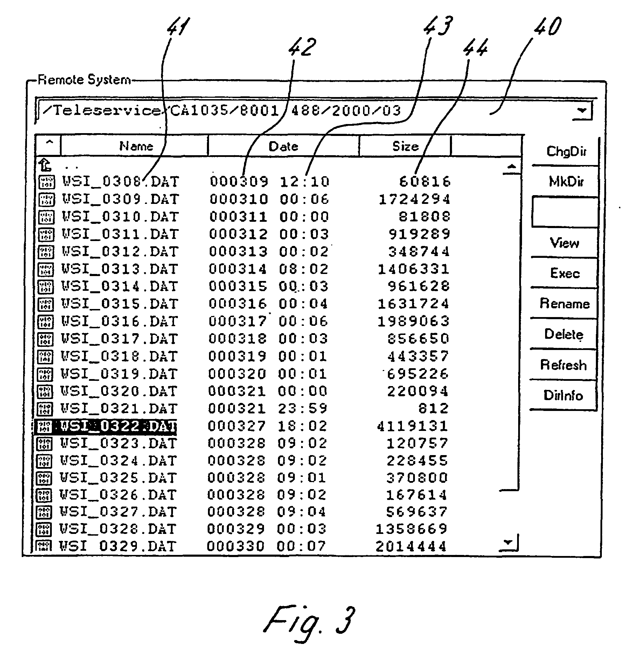

Die von der Maschine 20 erfaßten Daten werden in dem Rechner 5 gesammelt und abgespeichert. In regelmäßigen Intervallen werden diese Daten an den Rechner 10 beim Hersteller gesendet. Figur 3 zeigt eine Oberfläche für die Datenübertragung. Bei der Datenübertragung wird ein Dateiname 40 verwendet, der sowohl den Maschinentyp (CA 1035), die spezielle Maschinennummer und eine Datumsangabe enthält. Hierdurch ist eine eindeutige Zuordnung zu einer bestimmten Maschine möglich. Der Hersteller kann somit auf einfache Weise die von verschiedenen Maschinen erhaltenen Daten sortieren. Die Daten werden unter einem Dateinamen 41 abgelegt, die Datumsangaben 42 und 43 sowie Speichermengenangaben 44 enthalten.

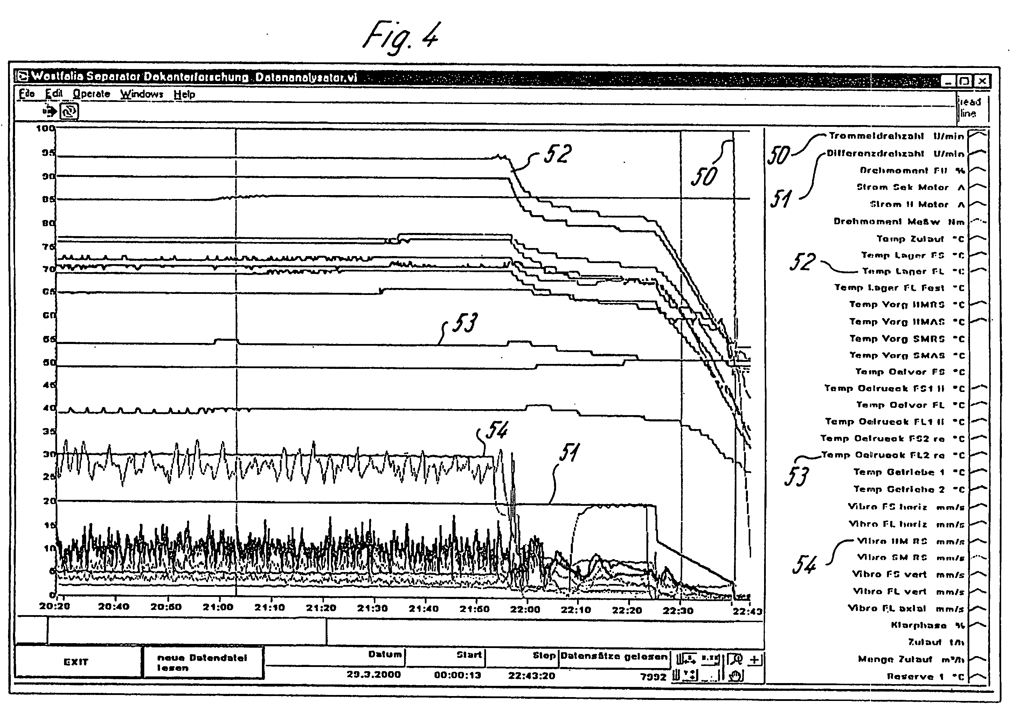

In Figur 4 ist eine Oberfläche dargestellt, die auf dem Bildschirm des Rechners 10 des Herstellers angezeigt wird, um mögliche Fehler zu analysieren. Die an der Maschine 20 erfaßten Betriebszustände sind in der rechten Spalte am Bildschirm aufgelistet, wobei beispielsweise die Trommeldrehzahl 50, die Differenzdrehzahl 51, die Lagertemperatur 52, die Ölrücklauftemperatur 53 und die Vibration 54 erfaßt wurden. Die einzelnen erfaßten Daten werden über die Zeit auf dem Diagramm aufgetragen, wobei auf der linken Seite des Diagramms eine Skalierung frei wählbar ist. Durch den Verlauf der Kurven läßt sich eine Fehlerdiagnose durchführen. Einerseits kann der Rechner 10 die Betriebszustände automatisch auswerten, um für standardisierte Fehler automatische Fehlermeldungen zu erzeugen. Mit Hilfe von Neuro-FUZZY-Logic Methoden ist das System selbst lernfähig und kann neue Fehlerzustände erkennen. Dabei können automatisch Fehlermeldungen erzeugt werden, die dem Experten 11 per E-mail, SMS oder sonstwie übermittelt werden, damit dieser kurzfristig reagieren kann. Der Experte 11 kann sich somit direkt an den Kunden 13 wenden, damit die Ausfallzeit der Maschine 20 minimiert wird. Die Ausgabe der Fehlermeldung erfolgt dabei einen Experten 11, der sich in der Arbeitszeit befindet, so daß beispielsweise bei Nachtzeit in Europa die Fehlermeldung automatisch nach Japan oder USA geschickt wird. Falls keine standardisierte Fehlermeldung erzeugt werden kann, muß der Experte 11 eine manuelle Auswertung vornehmen und kann dabei jedoch auf die bisher erhaltenen Daten der Maschine 20 zurückgreifen, was die Diagnosegenauigkeit erhöht.

Das erfindungsgemäße Informationssystem wurde anhand eines Dekanters beschrieben. Es ist auch beliebig für andere Maschinen einsetzbar, bei denen laufende Betriebszustände erfaßt werden, beispielsweise wenn speicherprogrammierbare Steuerungen und Meßeinrichtungen an der Maschine vorgesehen sind. Die Übertragung der Daten kann durch frei wählbare Leitungen bzw. Übertragungswege erfolgen.

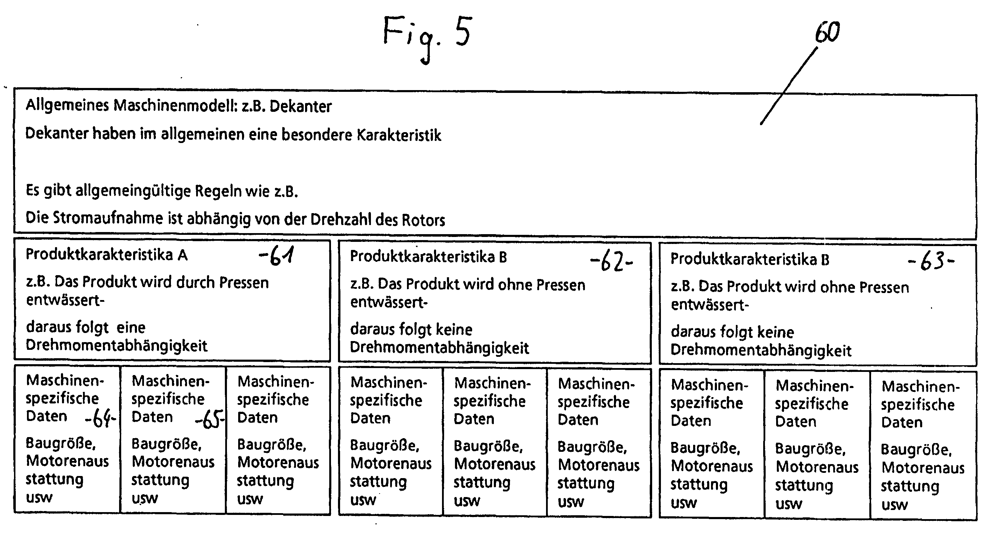

In Fig. 5 ist ein Blockschaltbild eines in dem Informationssystem verwendbaren mathematischen Modells gezeigt. In der ersten Ebene 60 sind allgemeine Charakteristikas des jeweiligen Maschinentyps, z.B. eines Dekanters enthalten. In der zweiten Ebene 61, 62 und 63 sind verschiedene prozeß- und produktspezifische Modelle gezeigt. In der dritten Ebene sind auf die jeweilige Maschine bezogene Charakteristikas 64, 65 etc. abgelegt. Die an der Maschine 20 erfaßten Daten werden auf die einzelnen Ebenen 60 bis 65 etc. verteilt, um die Betriebszustände in den einzelnen Ebenen zu analysieren. Das System ist dann selbst in der Lage zu erkennen, ob ein Prozeß-, ein Maschinenfehler oder ein Fehler vorliegt, der auf eine Kombination von Prozeß- und Maschinenfehler zurückgeht.

## Patentansprüche

1. Verfahren zur Steuerung von Anlagen und/oder Maschinen (20), insbesondere von Dekantern und Separatoren, mit folgenden Schritten:
- Erfassen von Betriebszuständen (30 - 36) wie z.B. Stromverbrauch, Temperatur, Fördergeschwindigkeiten etc. an der Maschine (20);
- Sammeln und Speichern der erfaßten Daten in eine Datenbank eines ersten Rechners (5);
- Übertragung der Daten zu einem Speicher eines zweiten Rechners (10), vorzugsweise zu einem Rechner (10) des Herstellers der Maschine (20);
- Auswertung der Daten und Vergleich mit dem mathematischen Modell der Maschine (20), wobei die Auswertung der Daten mittels Neuro-FUZZY-Logic Methoden erfolgt und die einzelnen Parameter (30 - 36) in ihrer Bedeutung gewichtet werden;
- Erfassung des Ist-Zustandes und Erzeugung einer Fehlermeldung, falls der Ist-Zustand von dem mathematischen Modell abweicht;
- automatische Ausgabe der Fehlermeldung durch den zweiten Rechner (10) an ein Peripheriegerät und/oder einen weiteren Rechner.

2. Verfahren nach Anspruch 1, **dadurch gekennzeichnet, daß** die automatische Ausgabe der Fehlermeldung als E-mail erfolgt.

3. Verfahren nach Anspruch 1 oder 2, **dadurch gekennzeichnet, daß** bei der Auswertung der Daten die Soll-Betriebsdaten angepaßt werden.

4. Verfahren nach einem der Ansprüche 1 bis 3, **dadurch gekennzeichnet, daß** der zweite Rechner (10) Steuerbefehle erzeugt, die an den ersten Rechner (5) weitergeleitet werden.

5. Verfahren nach einem der Ansprüche 1 bis 4, **dadurch gekennzeichnet, daß** für die automatische Ausgabe der Fehlermeldung ein Rechner bzw. Adressat ermittelt wird, der in einem Land mit gerade laufender Arbeitszeit steht.

6. Informationssystem für den Betrieb einer Maschine (20), insbesondere eines Dekanters oder Separators, mit:
- Meßeinrichtungen zur Erfassung von Betriebszuständen (30 - 36) wie z.B. Stromverbrauch, Temperatur, Fördergeschwindigkeiten etc. an der Maschine (20);
- einen mit den Meßeinrichtungen verbundenen ersten Rechner (5) zum Abspeichem der erfaßten Daten in einem Speicher;
- eine Übertragungseinrichtung (7) mittels der die gespeicherten Daten zu einem zweiten Rechner (10) übertragbar sind;
- eine Auswerteeinheit, die die übertragenen Daten über die Betriebszustände (30 - 36) mit vorgegebenen Daten des mathematischen Modells vergleicht, wobei die Auswerteeinheit einen Datenspeicher umfasst, in dem eine Vielzahl von Fehlerzuständen mit den dazugehörigen Betriebszuständen in Form eines lemfähigen mehrschichtigen mathematischen Modells abgespeichert sind, und
- eine Ausgabeeinheit, die bei Abweichung der Betriebszustände von einem vorgegebenen Wertebereich eine Fehlermeldung ausgibt.

7. Informationssystem nach Anspruch 6, **dadurch gekennzeichnet, daß** mit der Auswerteeinheit bei Erfüllung bestimmter Fehlerzustände Steuerbefehle erzeugbar sind.

8. Informationssystem nach Anspruch 7 oder 8, **dadurch gekennzeichnet, daß** die Maschine (20) ein Dekanter oder Separator ist und mittels der Meßeinrichtungen an der Maschine (20) z.B. der Stromverbrauch, die Temperatur an vorbestimmten Meßpunkten und die Umdrehungszahl der Trommel erfaßbar sind.

## Claims

1. Method for controlling systems and/or machines (20), in particular decanters and separators, having the following steps:
- detection of operating states (30-36), such as power consumption, temperature, feed rates, etc., at the machine (20);
- collection and storage of the recorded data in a database in a first computer (5);
- transfer of the data to a memory in a second computer (10), preferably to a computer (10) of the manufacturer of the machine (20);
- evaluation of the data and comparison with the mathematical model of the machine (20), with the data being evaluated by means of neuro-fuzzy logic methods, and the individual parameters (30-36) being weighted on the basis of their importance;
- detection of the actual state and production of a fault message if the actual state is not the same as the mathematical model;
- automatic outputting of the fault message by the second computer (10) to a peripheral and/or to a further computer.

2. Method according to Claim 1, **characterized in that** the fault message is automatically output as an e-mail.

3. Method according to Claim 1 or 2, **characterized in that** the nominal operating data is adapted during the evaluation of the data.

4. Method according to one of Claims 1 to 3, **characterized in that** the second computer (10) produces control commands which are passed to the first computer (5).

5. Method according to one of Claims 1 to 4, **characterized in that**, in order to automatically output a fault message, a computer or an addressee is determined which is in a country where normal working hours exist at that time.

6. Information system for operation of a machine (20), in particular of a decanter or separator, having:
- measurement devices for detection of operating states (30-36), such as power consumption, temperature, feed rates, etc., at the machine (20);
- a first computer (5), which is connected to the measurement devices, for storage of the detected data in a memory;
- a transmission device (7) by means of which the stored data is transmitted to a second computer (10);
- an evaluation unit, which compares the transmitted data relating to the operating states (30-36) with predetermined data from the mathematical model, with the evaluation unit having a data memory in which a large number of fault states are stored with the associated operating states in the form of a multilayer mathematical model with a learning capability, and
- an output unit, which outputs a fault message if the operating states are outside a predetermined value range.

7. Information system according to Claim 6, **characterized in that** the evaluation unit can produce control commands when specific fault states are satisfied.

8. Information system according to Claim 7 or 8, **characterized in that** the machine (20) is a decanter or separator and, for example, the power consumption, the temperature at predetermined measurement points and the speed of revolution of the drum can be detected by means of the measurement devices on the machine (20).

## Revendications

1. Procédé pour la commande d'installations et/ou de machines (20), en particulier de décanteurs et de séparateurs, avec les étapes suivantes :
- saisie des conditions de fonctionnement (30 - 36) tels que, par exemple, la consommation électrique, la température, les vitesses de transport, etc. de la machine (20) ;
- collection et stockage des données saisies dans une banque de données d'un premier ordinateur (5) ;
- transfert des données dans une mémoire d'un deuxième ordinateur (10), de préférence dans un ordinateur (10) du fabricant de la machine(20) ;
- exploitation des données et comparaison avec le modèle mathématique de la machine (20), l'exploitation des données se faisant à l'aide de procédés Neuro-FUZZY-Logic et l'importance des paramètres individuels (30 - 36) étant pondérée ;
- saisie de l'état réel et génération d'un message d'erreur dans le cas où l'état réel varie par rapport au modèle mathématique ;
- émission automatique du message d'erreur par le deuxième ordinateur (10) vers un dispositif périphérique et/ou vers un autre ordinateur.

2. Procédé selon la revendication 1, **caractérisé en ce que** l'émission automatique du message d'erreur se fait sous forme de message électronique.

3. Procédé selon la revendication 1 ou 2, **caractérisé en ce que**, lors de l'exploitation des données, les caractéristiques de fonctionnement théoriques sont adaptées.

4. Procédé selon l'une quelconque des revendications 1 à 3, **caractérisé en ce que** le deuxième ordinateur (10) génère des ordres de commande qui sont transmis au premier ordinateur (5).

5. Procédé selon l'une quelconque des revendications 1 à 4, **caractérisé en ce que**, pour l'émission automatique du message d'erreur, on détermine un ordinateur ou un destinataire qui se trouve dans un pays avec un temps de travail linéaire.

6. Système informatisé pour le fonctionnement d'une machine (20), en particulier d'un décanteur ou d'un séparateur, avec :
- des dispositifs de mesure pour la saisie des conditions de fonctionnement (30 - 36) tels que, par exemple, la consommation électrique, la température, les vitesses de transport, etc. de la machine (20) ;
- un premier ordinateur (5) raccordé aux dispositifs de mesure pour le stockage des données saisies dans une mémoire;
- un dispositif de transfert des données (7) à l'aide duquel les données mémorisées peuvent être transférées vers un deuxième ordinateur (10) ;
- une unité d'exploitation des données qui compare les données sur les conditions de fonctionnement (30 - 36) transférées avec des données prédéterminées du modèle mathématique, l'unité d'exploitation comprenant une mémoire dans laquelle une pluralité de conditions d'erreur avec les conditions de fonctionnement correspondantes est mémorisée sous forme d'un modèle mathématique adaptatif à plusieurs couches, et
- une unité d'émission qui émet un message d'erreur en cas de variation des conditions de fonctionnement par rapport à une plage de valeurs prédéterminée.

7. Système informatisé selon la revendication 6, **caractérisé en ce que** des ordres de commande peuvent être générés avec l'unité d'exploitation lorsque des conditions d'erreur déterminées sont remplies.

8. Système informatisé selon la revendication 7 ou 8, **caractérisé en ce que** la machine (20) est un décanteur ou un séparateur et **en ce que**, par exemple, la consommation électrique, la température à des points de mesure prédéterminés et la vitesse de rotation du tambour, peuvent être saisies à l'aide des dispositifs de mesure de la machine (20).
